(19)

Europäisches
Patentamt
European
Patent Office
Office européen
des brevets

(11)    **EP 2 955 645 B1**

(12)    **EUROPEAN PATENT SPECIFICATION**

(45) Date of publication and mention
of the grant of the patent:
**10.05.2017   Bulletin 2017/19**

(51) Int Cl.:
***G06F 17/30*** *(2006.01)*

(21) Application number: **15171817.8**

(22) Date of filing: **12.06.2015**

(54) **SYSTEM FOR AUTOMATED SEGMENTATION OF IMAGES THROUGH LAYOUT CLASSIFICATION**

SYSTEM ZUR AUTOMATISCHEN SEGMENTIERUNG VON BILDERN DURCH LAYOUTKLASSIFIZIERUNG

SYSTÈME DE SEGMENTATION AUTOMATIQUE D'IMAGES PAR CLASSIFICATION DE DISPOSITION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.06.2014   US 201462011269 P**
**11.06.2015   US 201514737467**

(43) Date of publication of application:
**16.12.2015   Bulletin 2015/51**

(73) Proprietor: **Asap54.com**
**IM21 1JE Douglas (IM)**

(72) Inventors:
• **VIDAL, André**
  **IM21 1JE Douglas (IM)**
• **HEESCH, Daniel**
  **IM21 1JE Douglas (IM)**

(74) Representative: **Ipside**
**25 Allée Cavalière**
**44500 La Baule-Escoublac (FR)**

(56) References cited:
**US-A1- 2008 144 943**

• **MARTIN D ET AL: "A database of human segmented natural images and its application to evaluating segmentation algorithms and measuring ecological statistics", PROCEEDINGS OF THE EIGHT IEEE INTERNATIONAL CONFERENCE ON COMPUTER VISION. (ICCV). VANCOUVER, BRITISH COLUMBIA, CANADA, JULY 7 - 14, 2001; [INTERNATIONAL CONFERENCE ON COMPUTER VISION], LOS ALAMITOS, CA : IEEE COMP. SOC, US, vol. 2, 7 July 2001 (2001-07-07), pages 416-423, XP010554118, ISBN: 978-0-7695-1143-6**
• **Olga Barinova ET AL: "Online Random Forest for Interactive Image Segmentation", , 10 May 2011 (2011-05-10), XP055219508, Retrieved from the Internet: URL:http://ceur-ws.org/Vol-870/paper_1.pdf [retrieved on 2015-10-08]**
• **CARSTEN ROTHER ET AL: ""GrabCut"", ACM TRANSACTIONS ON GRAPHICS, vol. 23, no. 3, 1 August 2004 (2004-08-01) , page 309, XP055157353, ISSN: 0730-0301, DOI: 10.1145/1015706.1015720**

## Description

### FIELD OF THE INVENTION

The claimed invention relates generally to the field of digital image processing.

### BACKGROUND OF THE INVENTION

The proposed method has been developed to solve a problem that arises in the context of content-based image retrieval, or visual search for short, that is the task of retrieving digital images from a plurality of images that are similar with respect to the visual characteristics, such as color, texture or shape, of some query image. Visual search technology affords several advantages over traditional keyword search. Importantly, it allows users to search for images in collections that have not been tagged with descriptive metadata and to search with an image rather than text, that is with a much richer query than a sequence of keywords.

Visual search technology is particularly relevant for large-scale aggregation sites on the web with many millions of products from thousands of online merchants. Often the image depicts the product in some context that is not relevant for visual search. To boost relevance, it is therefore imperative to segment first the region of interest before computing visual characteristics.

Image segmentation is a fundamental problem in image processing and computer vision, with visual search being but one of its many applications. Segmentation methods vary along several dimensions. Three of these segmentation methods are described herein to place the claimed invention in context. The first is the extent to which the method is automated. Fully automated approaches often exploit domain knowledge, for example the typical appearance of the objects one is trying to segment, or their co-occurrence statistics. Liang *et al.* considers the problem of segmenting traffic signs in images of road scenes. The general idea is to find features common to the object class that stand out against the background, e.g. a local color histogram. In many real-world applications, finding such features is more difficult, and would need to be learned through a combination of unsupervised or supervised learning techniques, rather than be discovered by intuition. At the other end of the spectrum are interactive segmentation methods that are guided by input from the user, such as a partial labeling of the image pixels as background or foreground (e.g., Rother *et al.;* Boykov). These constraints can lead to dramatic improvements in segmentation quality, but they do place an extra burden on the user and, because of the manual overhead, are ill-suited to segment large image collections.

Segmentation methods may further be distinguished according to the degree to which regions are labeled as part of the segmentation. Low-level segmentation is concerned merely with breaking an image up into regions without predicting the label. Semantic segmentation methods, by contrast, achieve segmentation and labeling of the resulting regions, often simultaneously. Semantic segmentation methods, as exemplified by Chen *et al.,* are often automated procedures that rely on class-specific appearance models obtained from hand-segmented training data. A good segmentation is one for which the associated labels are consistent with the underlying appearance models subject to certain contextual constraints, e.g. neighboring pixels are more likely to carry the same label.

Along a third dimension one can position segmentation methods according to how much they rely on an explicit model of the regions to be segmented. Whereas early approaches often involved explicit parametric modeling of the objects to be identified, more recently implicit approaches using transductive inference have yielded competitive results. Their advantage is that they use the data points themselves rather than models abstracted from the data. This can be more accurate and makes scaling to large number of classes easier. The general idea is to transfer properties of known, solved instances of a problem onto new, unsolved instances. Instead of learning and applying a model of how typical objects look like or co-occur, the instance at hand is compared with similar instances about which more is known. The idea has been applied to scene and object recognition (Torralba *et al.),* object detection (Russell *et al.*; Liu *et al.*) and object and event annotation (Quack *et al.).* Even if the image collection does not contain any labels, it has been shown to help tasks such as image completion and exploration (Hays *et al.* ) and 3D surface layout estimation (Divvala *et al.* ).

Automatic segmentations techniques have been the subject of several patents. In EP 2092444, automated segmentation of images forms part of several embodiments of a general system of image analysis with applications to e-commerce. In one embodiment, the foreground is identified as those pixels with features (color, grayscale, texture etc.) close to the median feature value of the central portion of the image.

In US Patent 7660468, the segmentation relies on an iterative process of refinement that may start with a classification of the entire image as belonging to a particular class (e.g. a full person shot, a head shot) using characteristic markers such as the presence and relative size of faces. The class of image determines the set of objects that may be expected to occur in the image. Given a model of their typical locations, a segmentation routine attempts to localize them using local color information.

US Published Application 20140010449 describes a system that allows users to fit clothing items extracted from images onto a picture of themselves or some default model. The clothing items are first extracted through a segmentation step from images of models wearing the items using known techniques such as neural networks, template matching or interactive and automated graph-cut algorithms, all of which require either an appearance model or additional input from the user.

US Patent 6775399 takes a pure signal processing approach to image segmentation. Various constraints known to affect the conditions of image production are used to mask any non-relevant areas of medical images.

The next two methods dispense with domain specific modeling of object classes and use the data directly to make inferences. US Published Application 20100054596 proposes a method that finds similar images to a given query either manually or through a content-based retrieval system based on the assumption that an image that is visually similar at a global level is likely to contain the same object. SIFT feature pairs are classified as foreground and background by imposing geometric consistency constraints, and the putative foreground and background points are used to initialize the GrabCut segmentation routine.

In EP 2615572, new images are segmented based on segmentation masks of one or more similar images. The segmentation masks can either be used directly to extract a region from the new image, or it provides constraints for any one of a number of segmentation algorithms that is then applied to the new image.

With reference to the aforesaid dimensions, the claimed system and method is automated, semantic, and non-parametric. Because the claimed system and method is automated it scales well to large collections. The claimed system and method is particularly well-suited to the demands of aggregation sites: because products are associated with the same domain, e.g. clothing, the image are somewhat constrained in their appearance. This structure can be exploited by an automated approach. At the same time, each merchant has its own way of picturing their products, so there is enough variability to pose a significant challenge to any off-the-shelf automated segmentation routine. For example, product images of apparel may show a model in various different poses, include different kinds of structured or gradient background, and so forth.

## SUMMARY OF THE INVENTION

The claimed invention provides a novel system and method for identifying the region of interest in digital images. The claimed system comprises a content-based image retrieval system that matches query images with products from a plurality of images.

The claimed system and method comprises a classifier that takes an image as input and predicts a sequence of image processing steps, which, when applied to the image, produces the region of interest for that image. The classifier is trained in a supervised fashion with images for which the region of interest and the optimal image processing steps are known. This information is gathered by human operators beforehand by composing elementary image processing steps that are optimal for a given set of images. A component of the processing steps is a segmentation routine that is initialized with information gained from preceding steps. The classifier thus produces as output an algorithm to be applied for region of interest detection.

For the purpose of retrieving images from a catalog based on their similarity to a query image, the claimed method is applied in two ways. First, the claimed method is applied offline to each image in the catalog leading to a region of interest from which visual features can subsequently be extracted. At query time, and on the assumption that the query images are part of the same vertical covered by the catalog, the claimed method is applied so that only the region of interest of the query is taken into account for the search.

In accordance with an exemplary embodiment of the claimed invention, a processing system for manually selecting and combining image processing sequences to extract a region of interest from an image comprises a server and a client device. The server comprises a server processor and a server database. The client device comprises a client processor, a client database and a display unit to display a user-interface. The client processor loads at least one image from the client database selected by an operator using the user-interface and transmits the image to the server processor for processing over a communications network. The server processor applies a current sequence of image processing operations selected by the operator to the image, stores a result of the current sequence of image processing operations applied on the image in the server database, and transmits the result of the current sequence of image processing operations to the client device over the communications network.

The client processor, in response to the receipt of the result from the server, displays the result of the current sequence of the image processing operations applied on the image on the display unit. After each display of the result, the client processor either (a) receives an acceptance of the result of the current sequence of the image processing operations from the operator via the user-interface and transmits the acceptance of the result of the current sequence of the image processing operations to the server over the communications network; or (b) receives an adjustment to the current sequence of image processing operations from the operator via the user-interface, and transmits the adjustment to the current sequence of image processing operations to the server over the communications network for further processing by the server processor.

The server processor, in response to the receipt of the adjustment to the current sequence of image processing operations from the client device, stores the current sequence of image processing operations as a previous sequence of image processing operations in the server database, applies the adjustment to the current sequence of image operations to the image, stores a result of the adjustment to the current sequence of image operations applied to the image in the server database, stores the adjustment to the current sequence of image processing operations as the current sequence of image processing operations, and transmits the result of the current sequence of image processing operations to the client device over the communications network. The server processor, in response to the receipt of the acceptance of the result of the current sequence of the image processing operations from the client device, associates and stores the current sequence of image processing operations as a segmentation strategy for said at least one image in the server database.

In accordance with an exemplary embodiment of the claimed invention, the aforesaid server processor automatically determines parameters of each image processing operation, receives an adjustment to one or more parameters of an image processing operation and applies the parameter adjustment to the image processing operation to the image.

In accordance with an exemplary embodiment of the claimed invention, the aforesaid server database comprises a plurality of images processed by the server processor and a segmentation strategy associated with each processed image. The aforesaid server processor selects a set of reference images from the server database and transmits the set of reference images to the client device over the communications network. The client processor receives an instruction to add a new image to or delete an image from the set of reference images from the user via the user interface, and transmits the instructions to the server over the communications network.

In accordance with an exemplary embodiment of the claimed invention, a retrieval system comprises a communications network, a server and a plurality of user client devices. The server comprises a server processor, a classifier and a server database. The server database comprises a set of reference images processed by the aforesaid processing system and a segmentation strategy associated with each reference image. Each user client device comprises a client processor, a client database and a display unit to display a user-interface. A user client device associated with a user transmits a set of search images to the server for processing over the communications network. For each search image, the server processor extracts a layout signature from the search image, the classifier selects a candidate image from the set of reference images stored in the database with a layout signature similar to the search image, and the server processor applies a segmentation strategy associated with the candidate image to said each search image.

In accordance with an exemplary embodiment of the claimed invention, the aforesaid classifier of the retrieval system clusters the reference images based on global image features. The aforesaid server processor of the retrieval system stores each reference image processed in the server database by an associated segmentation strategy and a layout signature that captures a global layout of the image. The layout signature is a histogram of oriented gradients.

In accordance with an exemplary embodiment of the claimed invention, aforesaid server processor of the retrieval system stores each reference image processed in the server database by a category of a region of interest.

In accordance with an exemplary embodiment of the claimed invention, the aforesaid classifier of the retrieval system determines the segmentation strategy for the search image based on a similarity to the reference images in same category as the search image.

In accordance with an exemplary embodiment of the claimed invention, the aforesaid classifier of the retrieval system determines the candidate image based on the k nearest neighbor search. The k visually similar reference images are determined based on their layout signatures.

In accordance with an exemplary embodiment of the claimed invention, the aforesaid classifier of the retrieval system groups images with the same segmentation strategy into clusters. A centroid represents a group of images. The classifier determines the k nearest neighbor by determining the k closest centroids.

In accordance with an exemplary embodiment of the claimed invention, the aforesaid classifier of the retrieval system determines the k nearest neighbors by employing at least one of the following: locality sensitive hashing, vector approximation files, best-bin first, or balanced box-decomposition trees.

In accordance with an exemplary embodiment of the claimed invention, the aforesaid classifier of the retrieval system identifies one or more regions of interest in each search image based on the selected segmentation strategy. The aforesaid server processor determines visual descriptors for different perceptual dimensions of one or more regions of interest in each search image. Preferably, the perceptual dimensions are color, shape and texture.

In accordance with an exemplary embodiment of the claimed invention, the aforesaid server processor of the retrieval system employs a bag of words representation such that each visual descriptor is a histogram of visual words. Each visual word corresponds to an aspect of the perceptual dimension.

In accordance with an exemplary embodiment of the claimed invention, the aforesaid server processor of the retrieval system employs a cosine similarity measure to compute a similarity score based on two visual descriptors.

In accordance with an exemplary embodiment of the claimed invention, the aforesaid user client device associated with the user receives a query comprising a query image and optional search criteria from the user via the user-interface. The aforesaid client processor of the user client device transmits the query to the server over the communications network. The aforesaid server processor extracts a layout signature from the query image. The aforesaid classifier selects a candidate image from the set of reference images stored in the database with a layout signature similar to the query image. The aforesaid server processor applies a segmentation strategy associated with the candidate image to the query image.

In accordance with an exemplary embodiment of the claimed invention, the aforesaid classifier of the retrieval system identifies one or more regions of interest in the query image based on the selected segmentation strategy. The aforesaid server processor determines visual descriptors for different perceptual dimensions of the regions of interest in the query image.

In accordance with an exemplary embodiment of the claimed invention, the aforesaid server processor of the retrieval system computes visual descriptors on the regions of interest in the query image, determines one or more search images from the server database that are similar to the query image, and ranks the identified searched images based on relevance.

In accordance with an exemplary embodiment of the claimed invention, the aforesaid user client device associated with the user receives a uniform resource locator of the image selected by the user via the user-interface. The aforesaid client processor of the user client device transmits the uniform resource locator the server for processing over the communications network.

In accordance with an exemplary embodiment of the claimed invention, the aforesaid user client device associated with the user receives a category selection as the optional search criteria from the user via the user-interface. The aforesaid client processor transmits the category selection to the server for processing over the communications network. The aforesaid classifier selects a segmentation strategy for the query image in accordance with the category selection.

In accordance with an exemplary embodiment of the claimed invention, the aforesaid user client device associated with the user receives a query comprising a query image and optional search criteria from the user via the user-interface. The aforesaid client processor of the user client device extracts a layout signature from the query image and transmits the query and the layout signature of the query image to the server over the communications network. The aforesaid classifier selects a candidate image from the set of reference images stored in the database with a layout signature similar to the query image. The aforesaid server processor applies a segmentation strategy associated with the candidate image to the query image.

This summary is provided to introduce a selection of concepts in a simplified form that are further described below in the detailed description. This summary is not intended to identify key features or essential features of the claimed subject matter, nor is it intended to be used limit the scope of the claimed subject matter.

Various other objects, advantages and features of the present invention will become readily apparent from the ensuing detailed description, and the novel features will be particularly pointed out in the appended claims.

## BRIEF DESCRIPTION OF THE DRAWINGS

The following detailed description, given by way of example, and not intended to limit the present invention solely thereto, will best be understood in conjunction with the accompanying drawings in which:

FIG. 1 is an illustration of a computing environment that enables human operators to segment objects from background regions in accordance with an exemplary embodiment of the claimed invention;

FIG. 2 is an illustration of a system that enables users to search for pictures similar to a query image in accordance with an exemplary embodiment of the claimed invention;

FIG. 3a shows an example of an image to be segmented using a sequence of image processing steps such as those shown in FIG. 4 in accordance with an exemplary embodiment of the claimed invention;

FIG. 3b shows the result of segmenting the image of FIG. 3a using a manually defined segmentation strategy in accordance with an exemplary embodiment of the claimed invention;

FIG. 4 is an example of a segmentation strategy consisting of a sequence of low-level image processing operations in accordance with an exemplary embodiment of the claimed invention;

FIG. 5 illustrates the structure of the classification module that maps images onto segmentation strategies in accordance with an exemplary embodiment of the claimed invention;

FIG. 6 illustrates the steps involved in processing an image query and matching it against the database of images to retrieve visually similar images in accordance with an exemplary embodiment of the claimed invention.

FIG. 7 illustrates the process of k nearest neighbor search in two dimensions when distances are computed with respective to individual images in accordance with an exemplary embodiment of the claimed invention;

FIG. 8 illustrates the process of k nearest neighbor search in two dimensions when distances are computed with respective to cluster centroids in accordance with an exemplary embodiment of the claimed invention; and

FIG. 9 illustrates an user interface for a content-based image retrieval system in accordance with an exemplary embodiment utilizing the claimed invention.

## DETAILED DESCRIPTION

In the following detailed description, reference is made to the accompanying drawings, which form a part hereof. In the drawings, similar symbols typically identify similar components, unless context suggests otherwise. The illustrative embodiments described in the detailed description, drawings, and claims are not meant to be limiting. Other embodiments may be utilized, and other changes may be made, without departing from the scope of the subject matter presented here. It will be readily understood that the components of the present disclosure, as generally described herein, and illustrated in the Figures, may be arranged, substituted, combined, and designed in a wide variety of different configurations, all of which are explicitly contemplated and made part of this disclosure.

As used herein, the terms "programmatic", "programmatically" or variations thereof mean through execution of code, programming or other logic through software, firmware or hardware. It is performed automatically but may be triggered manually by a user.

One or more embodiments described herein may be implemented using programmatic elements, often referred to as modules or components, although other names may be used. Such programmatic elements may include a program, a subroutine, a portion of a program, or a software component or a hardware component capable of performing one or more stated tasks or functions. As used herein, a module or component, can exist on a hardware component independently of other modules/components or a module/component can be a shared element or process of other modules/components, programs or machines. A module or component may reside on one machine, such as on a client or on a server, or a module/component may be distributed amongst multiple machines, such as on multiple clients or server machines. Any system described may be implemented in whole or in part on a server, or as part of a network service. Alternatively, a system such as described herein may be implemented on a local computer or terminal, in whole or in part. In either case, implementation of system provided for in this application may require use of memory, processors and network resources including data ports, and signal lines (optical, electrical etc.), unless stated otherwise.

Embodiments described herein generally require the use of computers, including processing and memory resources. For example, systems described herein may be implemented on a server or network service. Such servers may connect and be used by users over networks such as the Internet, or by a combination of networks, such as cellular networks and the Internet.

Alternatively, one or more embodiments described herein may be implemented locally, in whole or in part, on computing machines such as desktops, cellular phones, personal digital assistances or laptop computers. Thus, memory, processing and network resources may all be used in connection with the establishment, use or performance of any embodiment described herein (including with the performance of any method or with the implementation of any system).

Furthermore, one or more embodiments described herein may be implemented through the use of instructions that are executable by one or more processors. These instructions may be carried on a computer-readable medium. Machines shown in figures below provide examples of processing resources and computer-readable mediums on which instructions for implementing embodiments of the invention can be carried and/or executed. In particular, the numerous machines shown with embodiments of the invention include processor(s) and various forms of memory for holding data and instructions. Examples of computer-readable mediums include permanent memory storage devices, such as hard drives on personal computers or servers. Other examples of computer storage mediums include portable storage units, such as CD or DVD units, flash memory (such as carried on many cell phones and personal digital assistants (PDAs)), and magnetic memory. Computers, terminals, network enabled devices (e.g. mobile devices such as cell phones) are all examples of machines and devices that utilise processors, memory, and instructions stored on computer-readable mediums.

### System for building segmentation strategies

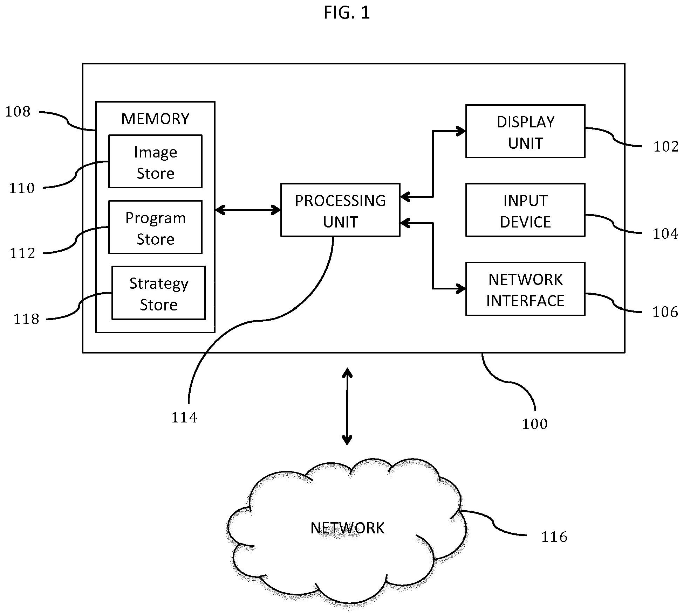

FIG. 1 is a schematic diagram of a suitable computing environment in which a human operator can define segmentation strategies for one or multiple images in accordance with an exemplary embodiment of the claimed invention. The computing device or computer 100 comprises a central processing unit or processor 114, and a data store 108 in communication with and accessible by the processor 114. Preferably, the data store 108 comprises one or more hard drives or databases to store programs (112), images (110) and strategies (118). The program database or store 112 holds programs for directing the processor 114 to retrieve images from the image database or store 110 and display them.

In addition, the processor 114 is connected to a display unit 102, such as a monitor or a touch screen, and is further connected to a user input device 104, such as a keyboard or the like. It is appreciated that the user input device 104 is not necessary if the display unit 102 is a touch screen. In addition, the processor 114 may be connected to a communications I/O port 106 for connection to a modem and ultimately the network or the Internet 116, for example, such that the human operator can access the computing device remotely, or that images may be obtained from the network to be stored locally.

In accordance with an exemplary embodiment of the claimed invention, the display unit 102 comprises an interface displaying a plurality of panels, loaded from a database 110 on the computing device 100. The interface enables the human operator to view the plurality of panels concurrently. Some panels may display the images currently being analyzed. Other panels may show a list of image processing operations that can be selected and applied to the images. Yet other panels provide controls over parameters associated with the various image processing operations. When applying an operation, the result is displayed in one of the panels to give the human operator immediate feedback on the efficacy of the chosen parameters and may prompt her to revise her choice until the region of interest is correctly identified. The interface further allows the operator to associate a chosen sequence of image processing operations with one or several images and save the resulting segmentation strategy to the strategies database or store 118 using the input device 104 or the touch screen 102.

Images may contain several different objects, each of which may potentially be of interest. For example, a product picture may show a model wearing a blouse, pants and shoes, each of which could be the product being advertised. If the category is not specified, the interface allows the human operator to choose a segmentation strategy for each distinct object in the image.

In accordance with an exemplary embodiment of the claimed invention, the system illustrated in FIG. 1, groups images according to their global layout. This grouping can be achieved using unsupervised clustering methods such as meanshift, k-means, or agglomerative or divisive hierarchical clustering methods, and using any of a number of global image features such as histogram of oriented gradients (HOG) or the responses of wavelet filters. The human operator can then define a segmentation strategy for entire image clusters. Product pictures of apparel, for example, can be clustered into groups of pictures without background, pictures with a complete model, pictures with only the upper body and no face, or close-ups of the face and shoulders.

In another exemplary embodiment, the clusters are defined by one or several metadata fields of the pictures. In the case of product images, this can be the category of the product and the names of the merchants.

When setting up a segmentation strategy for a given cluster, the interface displayed in the display unit 102 allows the human operator to remove or add images so as to ensure that all images of the cluster are properly segmented.

The segmentation strategies and the corresponding images and image clusters make up the training data that is subsequently used to segment new images.

Segmentation Strategies

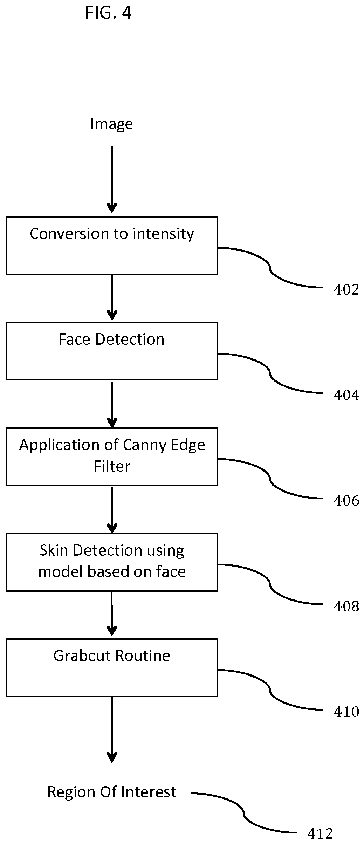

FIG. 4 shows an example of a segmentation strategy made up of several image processing by the processor 114. In this specific example, the processor 114 performs the following processing steps: conversion of the image pixels' RGB values to intensity values at step 402, face detection at step 404, modeling the color distribution of skin based on the detected face at step 406, a computation of the edge map using, for example, Canny's edge detection technique at step 408, and a Grabcut segmentation at step 410 initialized with information about likely foreground and background gained in previous steps. The output is a data structure that represents the region of interest at step 412, for example an array of (x,y) pairs denoting all the pixels belonging to the region of interest.

Segmentation strategies can be composed of a multitude of predefined functional components. Not all functional components may be needed and each functional component may be implemented in many different ways. For example, instead of using GrabCut as the final segmentation routine, one may employ other techniques such as "Magic Wand," "Intelligent Scissors," "Bayes Matting," "Knockout", "Graph Cut", "Level Sets", or a simple grayscale binarization.

Any of the basic image processing operations may be parameterized. For example, a cropping operation takes the top left and bottom right pixel position as parameters. Canny's edge detector can be tuned by choosing the size of the Gaussian filter, and two thresholds. These parameters can either be set by the human operator or obtained programmatically (e.g. the bounding box can be obtained from a binary edge map).

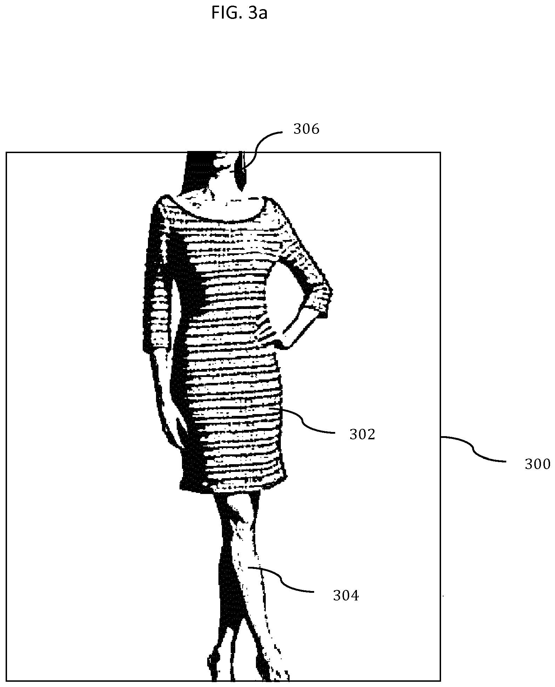

FIG. 3a shows a sketch of a product image 300 with a model wearing a dress 302. In accordance with an exemplary embodiment of the claimed invention, the segmentation strategy devised by the processor 114 for this and similar images is to isolate the dress 302 from the rest of the image 300, e.g. the legs 304 and the head 306.

In the example of FIG. 3a, the image shows only one product. In other cases, the model may wear a blouse and pants. In such cases, the human operator can specify segmentation strategies to be utilized by the processor 114 for each product.

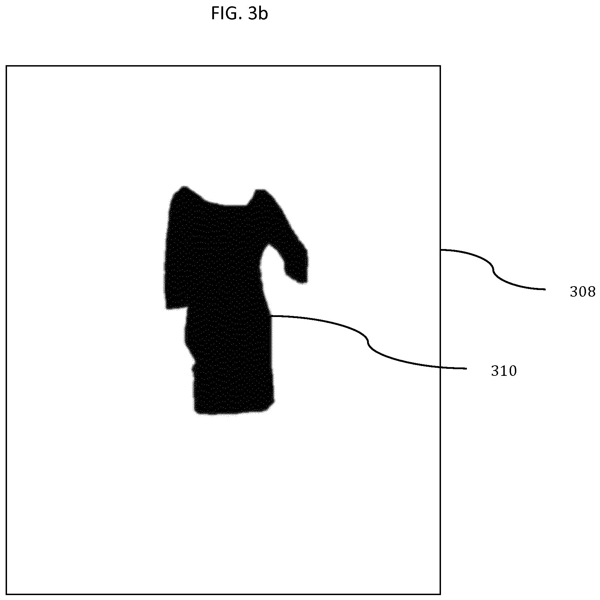

FIG. 3b shows an exemplary segmentation of the image depicted in FIG. 3a by the processor 114. The dark area 308 represents the region of interest. The image 310 can be referred to as a segmentation mask in which all non-white pixels belong to the region of interest.

Strategy Selection

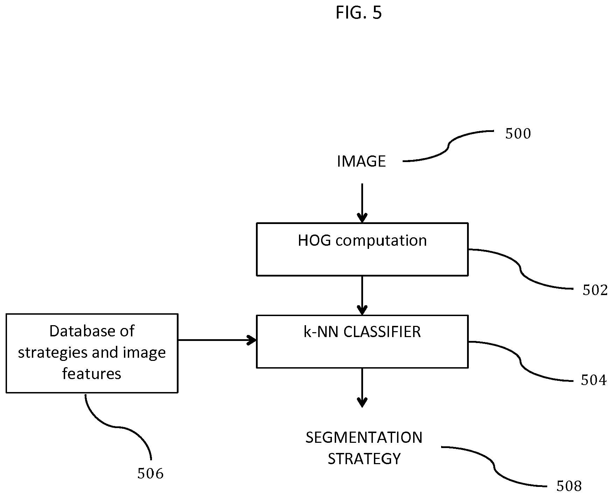

Once a pool of strategies has been specified as described herein, in accordance with an exemplary embodiment of the claimed invention, the classifier 500, as illustrated in FIG. 5, applies the pool of strategies to new images to determine the segmentation strategy that most closely matches the image structure and category of the new image. Given an image and optionally a category, the classifier 500 determines a suitable segmentation strategy based on the training data previously collected and stored in the database 108.

The input to the classifier 500 are visual characteristics of the image and optionally data about the image (e.g. the category). In accordance with an exemplary embodiment of the claimed invention, the classifier 500 is trained on histograms of oriented gradients (HOG) as proposed in Dalal at step 502. HOG descriptors are feature descriptors used in computer vision and image processing for object detection. The descriptor counts occurrences of gradient orientation in localized regions of an image, and is similar to edge orientation histograms, scale-invariant feature transform descriptors, and shape contexts. In accordance with an exemplary embodiment of the claimed invention, the classifier 500 divides the image into small connected regions, called cells at step 502. For each cell, the classifier 500 compiles a histogram of gradient directions or edge orientations for the pixels within the cell at step 502. The combination of these histograms then constitute the descriptor. For improved accuracy, in accordance with an exemplary embodiment of the claimed invention, the classifier 500 contrast-normalizes local histograms by calculating a measure of the intensity across a larger region of the image, called a block, and then using this value to normalize all cells within the block. Since HOG operate on localized cells, the classifier 500 employing HOG descriptors achieves a certain invariance to geometric and photometric transformations.

In accordance with an exemplary embodiment of the claimed invention, the classifier 500 utilizes the *k*-nearest neighbor classifier. The same feature that had previously been extracted from each image of the collection is computed on the new image at hand. The classifier 500 proceeds by finding the k images from the collection that are closest in terms of the descriptor at step 504. The classifier 500 computes closeness using any of a number of distance functions suitable for the chosen representation. For the HOG descriptor, the classifier 500 can use the intersection distance, distances derived from the correlation, Chi-Square, the Kullback-Leibler distance or the Bhattacharyya distance.

In accordance with an exemplary embodiment of the claimed invention, the classifier 500 learns the distance function through supervised learning such as large margin nearest neighbor or neighborhood components analysis.

If segmentation strategies are associated with image clusters consisting typically of more than one image, classifier 500 compares the new image with a representative image of that cluster. In accordance with an exemplary embodiment of the claimed invention, the representative image of a cluster is the image that minimizes its distance to all other images of that cluster, for the given descriptor and distance function. Let

$$x_i^c \in R^n, i = 1, ..., N_c \text{ be the set of descriptors of}$$

the $N_c$ images belonging to cluster *c*. The cluster is thus represented by the $x_j^c$ that minimizes

$$\sum_i d\left(x_j^c, x_i^c\right) \text{ where } d(\text{-},\text{-}) \text{ is some distance function.}$$

In accordance with another exemplary embodiment of the claimed invnetion, the cluster is represented by the arithmetic mean of all the descriptors of the images belonging to cluster *c*, that is $\bar{x} = \frac{1}{N_c}\sum_i x_i^c$.

In accordance with an exemplary embodiment of the claimed invention, k is chosen to be 1, so the output of the classifier 500 is the segmentation strategy of the closest image or cluster from the training set.

In accordance with an exemplary embodiment of the claimed invention, the classifier 500 performs *k*-nearest neighbor search efficiently using approximate techniques that guarantee to find the exact neighbor with high probability. Techniques such as locality sensitive hashing, vector approximation files, best-bin first, and balanced box-decomposition trees are all applicable.

To determine the winning strategy given the strategies of the *k*-nearest neighbors, the classifier 500 determines the strategy that has greatest support. In accordance with an exemplary embodiment of the claimed invention, the classifier 500 measures the support of a strategy in terms of the number of neighbors associated with that strategy. In accordance with another exemplary embodiment of the claimed invention, the classifier 500 weighs the support afforded by each neighbor by some function $w: R^n \mapsto R$ that monotonically decreases with the distance between the neighbor and the reference image. Let $d(n_i, q)$ be the distance between the query *q* and the *i*th neighbor $n_i$. Let $S_i$ be the strategy of the *i*th neighbour. The support P of strategy *S* is

$$P(S) = \sum_{\{x_i : S_i = S\}} w(x_j, x_i).$$

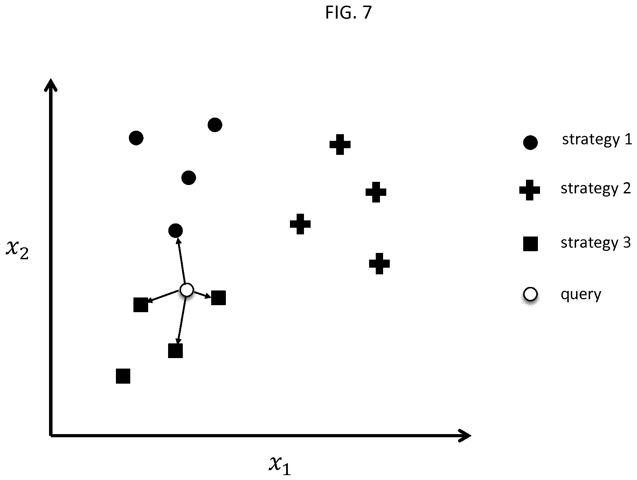

Figure 7 illustrates the method of finding the best segmentation strategy for a given query image by the classifier 500 in accordance with other exemplary embodiments of the claimed invention. For simplicity, the claimed invention is described herein considering a two-dimensional representation $x \in R^2$ of the image (HOG has 3,780 dimensions) representing the output of stage 502 in FIG. 5. The classifier 500 analyzes a set of images associated with one of three possible segmentation strategies (as per legend): strategy 1, strategy 2, strategy 3. This data is represented as 506 in FIG. 5. Given the visual representation of the query image, *k*-NN classifier 500 proceeds by determining the *k* closest images from the set *S*. In this illustration, the classifier 500 sets *k* = 4 and determines the distance as the Euclidean distance

$$d(x, y) = [\sum (x_i - y_i)^2]^{\frac{1}{2}}$$

In this example, three of the four closest images are associated with strategy 1, and only one with strategy 3. Strategy 1 therefore has the greatest support and will be used by the classifier 500 to segment the query image.

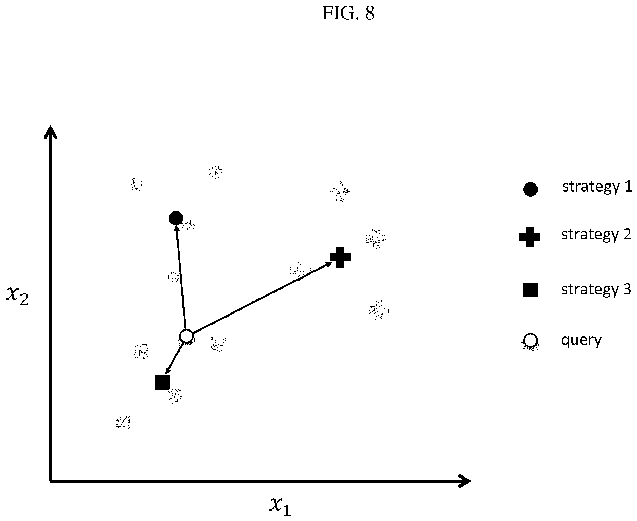

In FIG. 8, images associated with the same strategy (light-gray) are first clustered by the classifier 500 using a clustering algorithm such as *k*-means and each cluster is represented by the average over all its members commonly referred to as the cluster centroid (shown black). Given a query image, the classifier 500 using k-means now proceeds by finding the *k* closest cluster centroids and determining again the strategy with greatest support.

If several strategies have the same maximum support, the classifier 500 selects a strategy at random from that set. Experimentally, it is found that such strategies are often very similar and produce equivalent results. Moreover, when the classifier 500 utilizes a weighting function to attenuate the contributions of more distant neighbors, the probability of ties vanishes.

System for visual search

To prepare a collection of images, such as a product catalog, for visual search, each image is segmented using the approach outlined above. With the region of interest identified, the region is subsequently represented in terms of a plurality of visual characteristics, such as color histograms in different color spaces like CieLab, Luv, or HSV, histograms of oriented gradients, Haar wavelets, shape context and other standard descriptors. The features are typically indexed so that similar images can be found efficiently. Common index structures include inverted indexes as used in document retrieval, and hierarchical space partitioning schemes like kd trees.

When a user submits a query image, the same descriptors used to index the collection are extracted from the query, and the most similar images are retrieved using the given index structure and are displayed to the users.

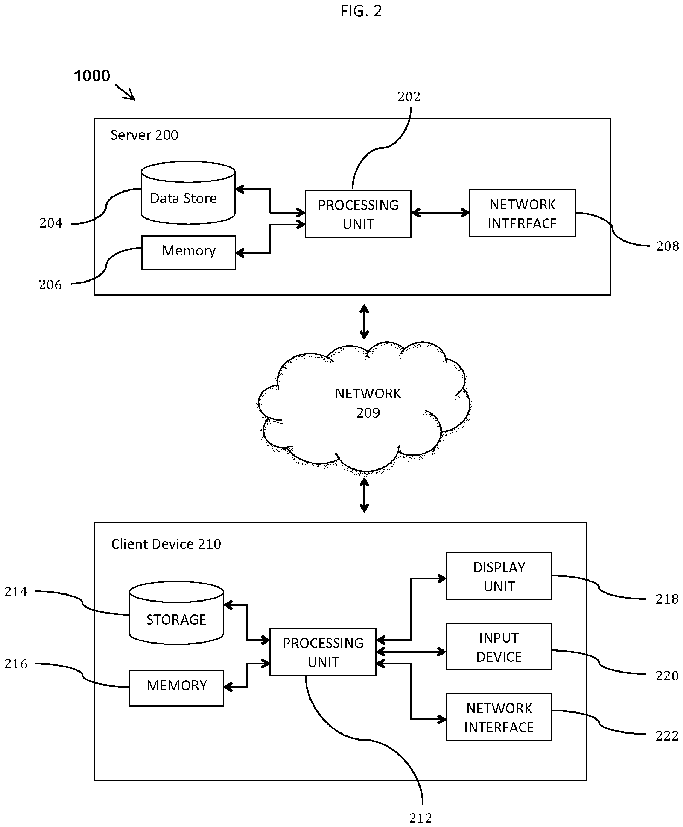

FIG. 2 illustrates a client-server system 1000 in accordance with an exemplary embodiment of the claimed invention that allows users to interact with the retrieval system. The client-server system 1000 comprises a server 200 with a processor 202 and a data store or database 204. The data store 204 holds the visual search index and the images to be retrieved. The server 200 communicates via a network interface 208 and a network 209, such as the Internet, with the client devices 210, such as laptops, desktops, smart phones, mobile devices or any processor based web-enabled devices. The processing unit or client processor 212 runs an application served by the server 200, for example a web application runs in the client's web browser, or an application downloaded onto their device 210, like a mobile application. The client device 210 comprises a screen or display unit 218 to display an user interface or a graphical user interface to enable the users to submit an image to the server 200 over the network 209, alongside various optional filters using input device 220 or touch screen 218. In the context of clothing search, the optional filters can be category and gender related to the product. The processing unit or server processor 202 communicating with the client device 210 utilizes the classifier 500, such as that depicted in FIG. 5 to identify the region of interest, compute image descriptors and compares these with the index stored in the data store 204. The server processor 202 responds with a list of images such as the URL at which the image can be found, and other metadata, such as the price and availability.

In other exemplary embodiments, the images to be retrieved or the index to be queried against, are kept on servers different from the server 200 that runs the search program and responds to client requests.

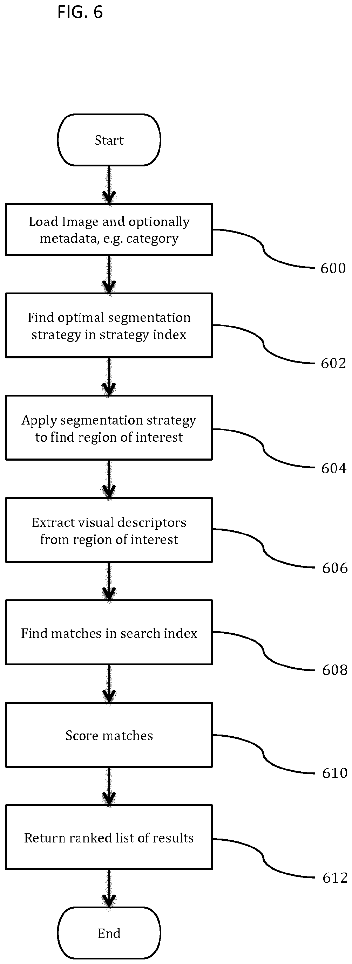

FIG. 6 shows a more detailed flowchart of the steps occurring on the server 200 when a query is submitted in accordance with an exemplary embodiment of the claimed invention. The server processor 202 loads the image into memory 206 at sep 600. Similar to the process described herein with respect to FIG. 5, the server processor 202 utilizes the classifier 500 to identify an appropriate segmentation strategy given the image and any optional metadata constraints at step 602. The server processor 202 applies the output of step 602 to the image to extract the region of interest at step 604. The server processor 202 computes visual descriptors for the region of interest at step 606. A common representation is that of an unordered list of 'visual words' and their frequency, referred to as a 'bag of words' model. Given a dictionary of 'visual words', such as a list of color names (or their RGB representation), the color content of an image is represented as a vector the *i*th component of which indicates the frequency of the *i*th visual word. In a toy example with the dictionary being made up of four colors "red", "blue, "green", "yellow", an image with pixels "red", "red", blue", "yellow" would be represented as a vector $[2,1,0,1]^T$. In practice, dictionaries contain many hundreds of 'visual words' and thus the image representations tend to be sparse (with most components being zero). The same bag of words representation is used to encode other appearance aspects such as the shape of the region of interest and its texture. The server processor 202 compares each of the descriptors from the region of interest against those stored in the database 204 to identify matches at step 608. Depending on the implementation and the descriptors, there are different ways to define requirements for an image to be a match. For example, with the descriptor being of the 'bag of words' type, all images with descriptors containing at least one of the words of the query are considered a match by the server processor 202. At step 610, the server processor 202 sores each of the matches identified in step 608. The server processor 202 gives a higher score, and accordingly a higher rank, to images with descriptors close to the query descriptors.

In accordance with an exemplary embodiment of the claimed invention, the server processor 202 implements step 610 by computing for each image the cosine similarity measure of its bag of words representation $x$ and that of a query $q$,

$$V(x) = \frac{\sum_i x_i q_i}{|x||q|}$$

The sum is effectively over all the terms from the dictionary shared between the query and the image. The result is a value between -1 and 1, and reaches its maximum when the query and the image vectors have the same direction (that is the frequency distribution over visual words is the same).

In accordance with another exemplary embodiment of the claimed invention, the server processor 202 implements step 610 by computing the intersection distance between the representation of the query and that of the match

$$V(x) = \frac{\sum_i \min(x_i, q_i)}{\min(|x|, |q|)}$$

Here the denominator normalizes the sum of the intersections by the size (norm) of the smaller descriptor.

Finally, the server processor 202 sorts the list based on the scores and formats the list before the list is returned to the client device 210 at step 612.

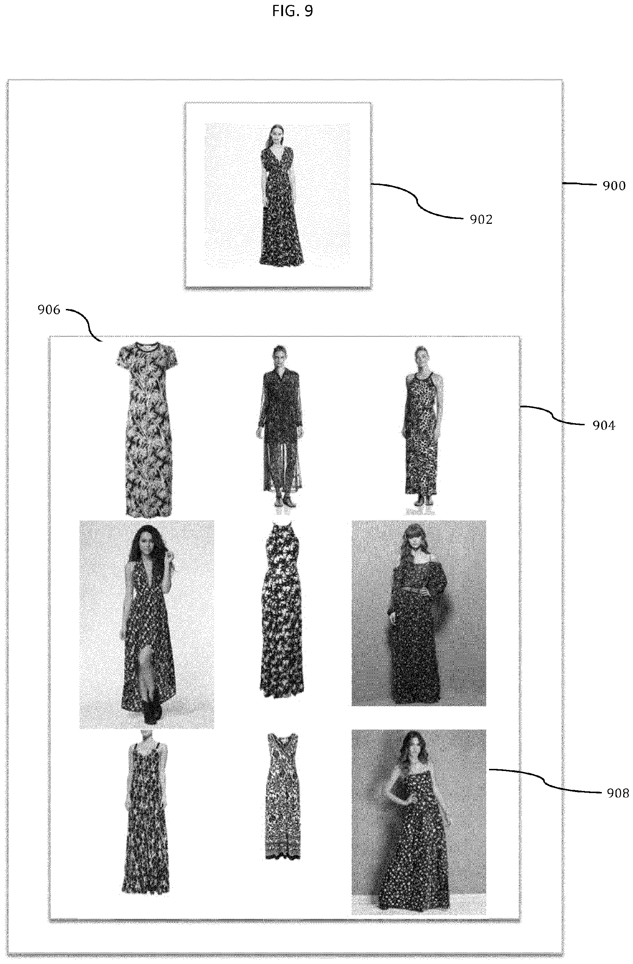

Turning now to FIG. 9, in accordance with an exemplary embodiment of the claimed invention, there is illustrated a content-based retrieval interface 900 that is displayed on the display unit 218 of the client device 210 to allow a user to manually trigger the exemplary process set forth in FIG. 6. The content-based retrieval interface 900 comprises an area showing a query image 902 that has been selected by the user either from their own file system or by specifying a URL on another server. Upon submission of the query image, the content-based retrieval interface 900 displays a set of images or results 904 containing products that are visually similar to the product in the query image 902. In the example shown in FIG. 9, the query image 902 shows a model against a gray background wearing a long dress with a floral pattern. By applying the process of FIG. 6 to the query at query time, the server processor 202 utilizing the classifier 500 extracts visual descriptors only from the dress, not from any other areas of the image (e.g. the model's face, the gray background). Because the segmentation method was also applied to each of the catalog images, the claimed system 1000 is able to retrieve images that have a different layout from the query (e.g. an image 906 depicting only a dress with no model or background, and an image 908 depicting a differently looking model against a structured background).

In accordance with an exemplary embodiment of the claimed invention, the user interface on the display unit 102, 218 enables human operators to specify a segmentation strategy for sets of similar images. A segmentation strategy is a specific sequence of image processing operations. Each such operation may be parameterized (e.g. a threshold value to binarise a grayscale image). Depending on the image processing operation, the parameter is either set as part of the strategy or determined automatically during the operation by the processor 114, 202. A set of images can be defined by applying metadata filters, such as the type of object (category, e.g. "dress") and the merchant.

In accordance with an exemplary embodiment of the claimed invention, the classifier 500 automatically composes the image sets by clustering images based on global image features (such as histogram of oriented gradients). Using the user interface on the display unit 102 or 218, the user can manually add or remove individual images from the set. The system 1000 provides visual feedback of the quality of the segmentation to help the operator iteratively refine the sequence of operations and any parameters pertaining to individual imaging operations.

In accordance with an exemplary embodiment of the claimed invention, the processor 114, 202 stores each processed reference image. the category of the region of interest (e.g. a "dress"), the associated strategy, and a layout signature that captures the global layout of the image (e.g. full body shot, lower body only, product only) in the database 108, 204. Preferably, the layout signature is a histogram of gradient (HOG)

In accordance with an exemplary embodiment of the claimed invention, the classifier 500 determines the best or optimal segmentation strategy for a new image Q based on the visual similarity of Q and the set of reference images stored in the database 108, 204. The search for an optimal strategy by the classifier 500 is constrained by the category of Q. The best strategy is thus that strategy associated with the same category as Q.

In accordance with an exemplary embodiment of the claimed invention, the classifier 500 employs k nearest neighbor search, such that for image Q, the k visually most similar reference images are determined based on their layout signature. Each neighbor votes for its associated segmentation strategy. The segmentation strategy with the most votes wins.

In accordance with an exemplary embodiment of the claimed invention, the classifier 500 groups images of the same segmentation strategy into clusters and represents these cluster4ed image by cluster representatives or centroids. The classifier 500 employing k nearest neighbor search determines the k closest centroids.

Vote of each neighbor is a function of the distance, such that more distant neighbors contribute less. In accordance with an exemplary embodiment of the claimed invention, the classifier 500 finds the neighbors by an approximate method, such as locality sensitive hashing, vector approximation files, best-bin first, and balanced box-decomposition trees.

In accordance with an exemplary embodiment of the claimed invention, the classifier 500 computes visual descriptors for different perceptual dimensions of the region of interest as determined by the optimal segmentation strategy. Preferably, the perceptual dimensions are color, shape and texture.

In accordance with an exemplary embodiment of the claimed invention, the classifier 500 employs a "bag of words" representation, such that each visual descriptor is a histogram over "visual words." Each visual word corresponds to a particular aspect of the perceptual dimension (e.g. "light-pink" for color, "corner" for texture). Preferably, the classifier 500 takes two visual descriptors and computes a similarity score.

In accordance with an exemplary embodiment of the claimed invention, the classifier 500 can employ a cosine similarity measure.

In accordance with an exemplary embodiment of the claimed invention, a retrieval system or processor 114, 202 utilizes the classifier 500 employing one or methods described herein, e.g., optimal segmentation strategy, k nearest neighbor search, visual descriptors, etc., to find images visually similar to a query. Preferably, the classifier 500 utilizes the same methodology to segment both catalog images (offline) and the query image (at runtime) so that visual similarity is computed only on the images' regions of interest.

In accordance with an exemplary embodiment of the claimed invention, the processor 114, 212 enables the users to upload an image or specify its URL, and view visually similar images with respect to the products identified in the query image. Preferably, the processor 114, 212 enables the users to specify a category in addition to an image. The classifier 500 then selects a segmentation strategy subject to the category constraint specified by the user.

Various omissions, modifications, substitutions and changes in the forms and details of the device illustrated and in its operation can be made by those skilled in the art without departing in any way from the scope of the present invention. Accordingly, the scope of the invention is not limited to the foregoing specification, but instead is given by the appended claims along with their full range of equivalents.

**Claims**

**1.** A processing system for manually selecting and combining image processing sequences to extract a region of interest from an image, comprising:

a server comprising a server processor and a server database;
a client device comprising a client processor, a client database and a display unit to display a user-interface;
the client processor is configured to load at least one image from the client database selected by an operator using the user-interface and to transmit said at least one image to the server processor for processing over a communications network;
the server processor applies a current sequence of image processing operations selected by the operator to said at least one image, stores a result of the current sequence of image processing operations applied on said at least one image in the server database, and transmits the result of the current sequence of image processing operations to the client device over the communications network;
the client processor, in response to the receipt of the result from the server, displays the result of the current sequence of the image processing operations applied on said at least one image on the display unit, after each display of the result, the client processor either (a) receives an acceptance of the result of the current sequence of the image processing operations from the operator via the user-interface and transmits the acceptance of the result of the current sequence of the image processing operations to the server over the communications network; or (b) receives an adjustment to the current sequence of image processing operations from the operator via the user-interface, and transmits the adjustment to the current sequence of image processing operations to the server over the communications network for further processing by the server processor;
the server processor, in response to the receipt of the adjustment to the current sequence of image processing operations from the client device, stores the current sequence of image processing operations as a previous sequence of image processing operations in the server database, applies the adjustment to the current sequence of image operations to the image, stores a result of the adjustment to the current sequence of image operations applied to said at least one image in the server database, stores the adjustment to the current sequence of image processing operations as the current sequence of image processing operations, and transmits the result of the current sequence of image processing operations to the client device over the communications network; and
the server processor, in response to the receipt of the acceptance of the result of the current sequence of the image processing operations from the client device, associates and stores the current sequence of image processing operations as a segmentation strategy for said at least one image in the server database.

2. The processing system of claim 1, wherein the server processor automatically determines parameters of each image processing operation, receives an adjustment to one or more parameters of an image processing operation and applies the parameter adjustment to the image processing operation to the image.

3. The processing system of claim 1, wherein the server database comprises a plurality of images processed by the server processor and a segmentation strategy associated with each processed image; wherein the server processor selects a set of reference images from the server database and transmits the set of reference images to the client device over the communications network; and wherein the client processor receives an instruction to add a new image to or delete an image from the set of reference images from the user via the user interface, and transmits the instructions to the server over the communications network.

4. A retrieval system, comprising:

   a communications network;
   a server comprising a server processor, a classifier and a server database comprising a set of reference images processed by the processing system of claim 1 and a segmentation strategy associated with each reference image;
   a plurality of user client devices, each comprising a client processor, a client database and a display unit to display a user-interface;
   a user client device associated with a user transmits a set of search images to the server for processing over the communications network;
   for each search image,

      the server processor extracts a layout signature from each search image;
      the classifier selects a candidate image from the set of reference images stored in the database with a layout signature similar to said each search image; and
      the server processor applies a segmentation strategy associated with the candidate image to said each search image.

5. The retrieval system of claim 4, wherein the classifier clusters the reference images based on global image features; and wherein the server processor stores each reference image processed in the server database by an associated segmentation strategy and a layout signature that captures a global layout of the image, the layout signature being a histogram of oriented gradients.

6. The retrieval system of claim 5, wherein the server processor stores each reference image processed in the server database by a category of a region of interest.

7. The retrieval system of claim 4, wherein the classifier determines the segmentation strategy for said each search image based on a similarity to the reference images in same category as said each search image.

8. The retrieval system of claim 4, wherein the classifier determines the candidate image based on k nearest neighbor search, k visually similar reference images are determined based on their layout signatures.

9. The retrieval system of claim 8, wherein the classifier groups images with same segmentation strategy into clusters, a centroid representing each group of images; and wherein the classifier determines the k nearest neighbor by determining k closest centroids.

10. The retrieval system of claim 8, wherein the classifier determines the k nearest neighbors by employing at least one of the following: locality sensitive hashing, vector approximation files, best-bin first, or balanced box-decomposition trees.

11. The retrieval system of claim 4, wherein the classifier identifies one or more regions of interest in said each search image based on the selected segmentation strategy; and wherein the server processor determines visual descriptors for different perceptual dimensions of said one or more regions of interest in said each search image.

12. The retrieval system of claim 11, wherein the perceptual dimensions are color, shape and texture.

13. The retrieval system of claim 11, wherein the server processor employs a bag of words representation such that each visual descriptor is a histogram of visual words, each visual word corresponding to an aspect of the perceptual dimension.

14. The retrieval system of claim 11, wherein the server processor employs a cosine similarity measure to compute a similarity score based on two visual descriptors.

15. The retrieval system of claim 4, wherein the user client device associated with the user receives a query comprising a query image and optional search criteria from the user via the user-interface associated with the user client device; wherein the client processor of the user client device transmits the query to the server over the communications network; wherein the server processor extracts a layout signature from the query image; wherein the classifier selects a candidate image from the set of reference images stored in the database with a layout signature similar to the query image; and wherein the server processor applies a segmentation strategy associated with the candidate image to the query image.

16. The retrieval system of claim 15, wherein the classifier identifies one or more regions of interest in the query image based on the selected segmentation strategy; and wherein the server processor determines visual descriptors for different perceptual dimensions of the regions of interest in the query image.

17. The retrieval system of claim 15, wherein the server processor computes visual descriptors on the regions of interest in the query image, determines one or more search images from the server database that are similar to the query image, and ranks the identified searched images based on relevance.

18. The retrieval system of claim 15, wherein the user client device associated with the user receives a uniform resource locator of the image selected by the user via the user-interface associated with the user client device; and wherein the client processor of the user client device transmits the uniform resource locator the server for processing over the communications network.

19. The retrieval system of claim 15, wherein the user client device associated with the user receives a category selection as the optional search criteria from the user via the user-interface associated with the user client device; wherein the client processor transmits the category selection to the server for processing over the communications network; and wherein the classifier selects a segmentation strategy for the query image in accordance with the category selection.

20. The retrieval system of claim 4, wherein the user client device associated with the user receives a query comprising a query image and optional search criteria from the user via the user-interface associated with the user client device; wherein the client processor of the user client device extracts a layout signature from the query image and transmits the query and the layout signature of the query image to the server over the communications network; wherein the classifier selects a candidate image from the set of reference images stored in the database with a layout signature similar to the query image; and wherein the server processor applies a segmentation strategy associated with the candidate image to the query image.

**Patentansprüche**

1. Bearbeitungssystem zur manuellen Auswahl und Kombination von Bildbearbeitungssequenzen, um einen relevanten Bereich eines Bildes abzufragen, welches umfasst:

einen Server mit einem Serverprozessor und einer Serverdatenbank;
eine Kundeneinrichtung mit einem Kundenprozessor, einer Kundendatenbank und einem Anzeigesystem zur Anzeige einer Anwenderschnittstelle;
der Kundenprozessor ist konfiguriert, um mindestens ein Bild aus der Kundendatenbank hochzuladen, welches von einem Bediener, der die Anwenderschnittstelle benutzt, ausgewählt wurde und um das mindestens eine Bild an den Serverprozessor zur Bearbeitung in einem Kommunikationsnetzwerk zu übertragen;
der Serverprozessor wendet an dem mindestens einen Bild eine aktuelle Sequenz von Bildbearbeitungsvorgängen an, die vom Bediener ausgewählt wird, speichert ein Ergebnis der an dem mindestens einen Bild angewendeten aktuellen Sequenz von Bildbearbeitungsvorgängen in der Serverdatenbank und überträgt das Ergebnis der aktuellen Sequenz der Bildbearbeitungsvorgänge an die Kundeneinrichtung im Kommunikationsnetzwerk;
als Antwort auf den Eingang des Ergebnisses vom Server zeigt der Kundenprozessor das Ergebnis der aktuellen Sequenz der an dem mindestens einen Bild angewendeten Bildbearbeitungsvorgänge am Anzeigesystem an, nach jeder Anzeige des Ergebnisses empfängt der Kundenprozessor (a) über die Anwenderschnittstelle eine Annahme des Ergebnisses der aktuellen Sequenz der Bildbearbeitungsvorgänge durch den Bediener und überträgt die Annahme des Ergebnisses der aktuellen Sequenz der Bildbearbeitungsvorgänge an den Server im Kommunikationsnetzwerk; beziehungsweise (b) erhält über die Anwenderschnittstelle eine Anpassung der aktuellen Sequenz der Bildbearbeitungsvorgänge durch den Bediener, und überträgt die Anpassung der aktuellen Sequenz der Bildbearbeitungsvorgänge an den Server im Kommunikationsnetzwerk zur späteren Bearbeitung durch den Serverprozessor;
als Antwort auf den Eingang der Anpassung der aktuellen Sequenz der Bildbearbeitungsvorgänge der Kundeneinrichtung speichert der Serverprozessor die aktuelle Sequenz der Bildbearbeitungsvorgänge als eine vorhergehende Sequenz von Bildbearbeitungsvorgängen in der Serverdatenbank, wendet am Bild die Anpassung der aktuellen Sequenz von Bildbearbeitungsvorgängen an, speichert ein Ergebnis der Anpassung der aktuellen Sequenz der an dem mindestens einen Bild angewendeten Bildbearbeitungsvorgänge in der Serverdatenbank, speichert die Anpassung der aktuellen Sequenz der Bildbearbeitungsvorgänge als aktuelle Sequenz von Bildbearbeitungsvorgängen, und überträgt das Ergebnis der aktuellen Sequenz von Bildbearbeitungsvorgängen an die Kundeneinrichtung im Kommunikationsnetzwerk; und als Antwort auf den Eingang der Annahme des Ergebnisses der aktuellen Sequenz von Bildbearbeitungsvorgängen der Kundeneinrichtung assoziiert und speichert der Serverprozessor die aktuelle Sequenz von Bildbearbeitungsvorgängen als Segmentationsstrategie für das mindestens eine Bild in der Serverdatenbank.

2. Bearbeitungssystem nach Anspruch 1, bei dem der Serverprozessor automatisch die Parameter jedes Bildbearbeitungsvorgangs bestimmt, eine Anpassung eines oder mehrerer Parameter eines Bildbearbeitungsvorgangs erhält und an dem Bild die Anpassung des Parameters des Bildbearbeitungsvorgangs anwendet.

3. Bearbeitungssystem nach Anspruch 1, bei dem die Serverdatenbank eine Vielzahl von vom Serverprozessor bearbeiteten Bildern und eine mit jedem bearbeiteten Bild assoziierte Segmentationsstrategie umfasst; bei dem der Serverprozessor aus der Serverdatenbank eine Reihe von Referenzbildern auswählt und die Reihe der Referenzbilder an die Kundeneinrichtung im Kommunikationsnetzwerk überträgt; und in dem der Kundenprozessor eine Anweisung erhält, um ein neues Bild hinzuzufügen oder ein Bild der vom Anwender über die Anwenderschnittstelle kommenden Reihe der Referenzbilder löscht, und die Anweisungen an den Server im Kommunikationsnetzwerk überträgt.

4. Netzrückspeisungssystem, welches umfasst:

ein Kommunikationsnetzwerk;
einen Server mit einem Serverprozessor, einem Klassifizierer und einer Serverdatenbank, die eine Reihe von vom Bearbeitungssystem nach Anspruch 1 bearbeitete Referenzbilder und eine jedem Referenzbild zugeordnete Segmentationsstrategie umfasst;
eine Vielzahl von Anwenderkundeneinrichtungen mit jeweils einem Kundenprozessor, einer Kundendatenbank und einem Anzeigesystem zur Anzeige einer Anwenderschnittstelle;
eine Anwenderkundeneinrichtung, die einem Anwender zugeordnet ist, überträgt eine Reihe von Suchbildern zur Bearbeitung im Kommunikationsnetzwerk an den Server;
für jedes Suchbild fragt der Serverprozessor ausgehend von jedem Suchbild eine Konfigurationssignatur ab;
der Klassifizierer wählt aus der Reihe der in der Datenbank gespeicherten Referenzbilder ein Anwärterbild mit einer jedem Suchbild ähnlichen Konfigurationssignatur aus; und
der Serverprozessor wendet an jedem Suchbild eine dem Anwärterbild assoziierte Segmentationsstrategie an.

5. Netzrückspeisungssystem nach Anspruch 4, bei dem der Klassifizierer die Referenzbilder anhand von allgemeinen Bildkennzeichen zusammenfasst; und bei dem der Serverprozessor jedes bearbeitete Referenzbild in der Serverdatenbank über eine zugeordnete Segmentationsstrategie und eine Konfigurationssignatur, die eine allgemeine Konfiguration des Bildes erfasst, speichert, wobei die Konfigurationssignatur ein Histogramm von orientierten Gradienten ist.

6. Netzrückspeisungssystem nach Anspruch 5, bei dem der Serverprozessor jedes bearbeitete Referenzbild über eine Kategorie eines relevanten Bereichs in der Serverdatenbank speichert.

7. Netzrückspeisungssystem nach Anspruch 4, bei dem der Klassifizierer für jedes Suchbild anhand einer Ähnlichkeit in Bezug zu den Referenzbildern der gleichen Kategorie wie jedes Suchbild die Segmentationsstrategie bestimmt.

8. Netzrückspeisungssystem nach Anspruch 4, bei dem der Klassifizierer anhand einer Suche der k nächsten Nachbarn das Anwärterbild bestimmt, wobei k visuell ähnliche Referenzbilder anhand ihrer Konfigurationssignaturen bestimmt werden.

9. Netzrückspeisungssystem nach Anspruch 8, bei dem der Klassifizierer Bilder mit der gleichen Segmentationsstrategie traubenförmig zusammenfasst, wobei ein Flächenschwerpunkt jede Bildergruppe darstellt; und bei dem der Klassifizierer den nächstgelegenen Nachbarn k bestimmt, indem die nächstgelegenen k Flächenschwerpunkte bestimmt werden.

10. Netzrückspeisungssystem nach Anspruch 8, bei dem der Klassifizierer die k nächstgelegenen Nachbarn bestimmt, indem mindestens eins der folgenden Elemente angewendet wird: ähnlichkeitssensible Hash-Funktion, Vektor-Annäherungs-Dateien, *best-bin first,* oder BBD-Bäume *(balanced box-decomposition trees).*

11. Netzrückspeisungssystem nach Anspruch 4, bei dem der Klassifizierer in jedem Suchbild anhand der ausgewählten Segmentationsstrategie einen oder mehrere relevante Bereiche identifiziert; und bei dem der Serverprozessor visuelle Deskriptoren für verschiedene wahrnehmbare Dimensionen des einen oder der mehreren relevanten Bereiche in jedem Suchbild bestimmt.

12. Netzrückspeisungssystem nach Anspruch 11, bei dem die wahrnehmbaren Dimensionen die Farbe, Form und Textur sind.

13. Netzrückspeisungssystem nach Anspruch 11, bei dem der Serverprozessor eine Wörtersack-Darstellung anwendet, sodass jeder visuelle Deskriptor ein Histogramm visueller Wörter ist, wobei jedes visuelle Wort einem Aspekt der wahrnehmbaren Dimension entspricht.

14. Netzrückspeisungssystem nach Anspruch 11, bei dem der Serverprozessor ein Cosinus-Ähnlichkeitsmaß anwendet, um ein auf zwei visuelle Deskriptoren basierendes Ähnlichkeitsergebnis zu berechnen.

15. Netzrückspeisungssystem nach Anspruch 4, bei dem die dem Anwender zugeordnete Anwenderkundeneinrichtung eine Anfrage erhält, die ein Abfragebild und optionale Suchkriterien seitens des Anwenders über die der Anwenderkundeneinrichtung assoziierte Anwenderschnittstelle umfasst; bei dem der Kundenprozessor der Anwenderkundeneinrichtung die Abfrage an den Server im Kommunikationsnetzwerk überträgt; bei dem der Serverprozessor anhand des Abfragebildes eine Konfigurationssignatur abfrägt; bei dem der Klassifizierer anhand der Reihe der in der Datenbank mit einer dem Abfragebild ähnlichen Konfigurationssignatur gespeicherten Referenzbilder ein Anwärterbild auswählt; und bei dem der Serverzprozessor am Abfragebild eine dem Anwärterbild assoziierte Segmentationsstrategie anwendet.

16. Netzrückspeisungssystem nach Anspruch 15, bei dem der Klassifizierer im Abfragebild anhand der ausgewählten Segmentationsstrategie einen oder mehrere relevante Bereiche identifiziert; und bei dem der Serverprozessor visuelle Deskriptoren für verschiedene wahrnehmbare Dimensionen der relevanten Bereiche im Abfragebild bestimmt.

17. Netzrückspeisungssystem nach Anspruch 15, bei dem der Serverprozessor in den relevanten Bereichen des Abfragebildes visuelle Deskriptoren berechnet, anhand der Serverdatenbank ein oder mehrere Suchbilder bestimmt, die dem Abfragebild ähnlich sind, und die identifizierten gesuchten Bilder anhand ihrer Relevanz einordnet.

18. Netzrückspeisungssystem nach Anspruch 15, bei dem die dem Anwender assoziierte Anwenderkundeneinrichtung einen einheitlichen Ressourcen-Lokalisator des vom Anwender über die Anwenderschnittstelle, die der Anwenderkundeneinrichtung zugeordnet ist, ausgewählten Bildes erhält; und bei dem der Kundenprozessor der Anwenderkundeneinrichtung den einheitlichen Ressourcen-Lokalisator an den Server zur Bearbeitung im Kommunikationsnetzwerk überträgt.

19. Netzrückspeisungssystem nach Anspruch 15, bei dem die dem Anwender zugeordnete Anwenderkundeneinrichtung seitens des Anwenders via der der Anwenderkundeneinrichtung zugeordneten Anwenderschnittstelle eine Auswahl von Kriterien als optionale Suchkriterien erhält; bei dem der Kundenprozessor die Auswahl von Kategorien an den Server zur Bearbeitung im Kommunikationsnetzwerk überträgt; und bei dem der Klassifizierer gemäß der Auswahl von Kategorien eine Segmentationsstrategie für das Abfragebild auswählt.

20. Netzrückspeisungssystem nach Anspruch 4, bei dem die dem Anwender zugeordnete Anwenderkundeneinrichtung eine Anfrage erhält, die ein Abfragebild und optionale Suchkriterien seitens des Anwenders über die der Anwenderkundeneinrichtung zugeordnete Anwenderschnittstelle umfasst; bei dem der Kundenprozessor der Anwenderkundeneinrichtung anhand des Abfragebildes eine Konfigurationssignatur abfragt und die Abfrage und die Konfigurationssignatur des Abfragebildes an den Server im Kommunikationsnetzwerk überträgt; bei dem der Klassifizierer anhand der Reihe der in der Datenbank mit einer dem Abfragebild ähnlichen Konfigurationssignatur gespeicherten Referenzbilder ein Anwärterbild auswählt; und bei dem der Serverprozessor am Abfragebild eine dem Anwärterbild assoziierte Segmentationsstrategie anwendet.

**Revendications**

1. Système de traitement pour sélectionner manuellement et combiner des séquences de traitement d'image afin d'extraire une région d'intérêt d'une image, comprenant :

   un serveur comprenant un processeur de serveur et une base de données de serveur ;
   un dispositif client comprenant un processeur client, une base de données client et une unité d'affichage pour afficher une interface utilisateur ;

le processeur client est configuré pour charger au moins une image à partir de la base de données client sélectionnée par un opérateur utilisant l'interface utilisateur et pour transmettre ladite au moins une image au processeur de serveur pour traitement sur un réseau de communication ;

le processeur de serveur applique une séquence actuelle d'opérations de traitement d'image sélectionnée par l'opérateur à ladite au moins une image, stocke un résultat de la séquence actuelle d'opérations de traitement d'image appliquée à ladite au moins une image dans la base de données de serveur, et transmet le résultat de la séquence actuelle d'opérations de traitement d'image au dispositif client sur le réseau de communication ;

le processeur client, en réponse à la réception du résultat provenant du serveur, affiche le résultat de la séquence actuelle d'opérations de traitement d'image appliquée à ladite au moins une image sur l'unité d'affichage, après chaque affichage du résultat, le processeur client (a) reçoit une acceptation du résultat de la séquence actuelle d'opérations de traitement d'image de la part de l'opérateur via l'interface utilisateur et transmet l'acceptation du résultat de la séquence actuelle d'opérations de traitement d'image au serveur sur le réseau de communication ; ou bien (b) reçoit un ajustement de la séquence actuelle d'opérations de traitement d'image de la part de l'opérateur via l'interface utilisateur, et transmet l'ajustement de la séquence actuelle d'opérations de traitement d'image au serveur sur le réseau de communication pour traitement ultérieur par le processeur de serveur ;

le processeur de serveur, en réponse à la réception de l'ajustement de la séquence actuelle d'opérations de traitement d'image du dispositif client, stocke la séquence actuelle d'opérations de traitement d'image en tant que séquence précédente d'opérations de traitement d'image dans la base de données de serveur, applique à l'image l'ajustement de la séquence actuelle d'opérations [de traitement] d'image, stocke un résultat de l'ajustement de la séquence actuelle d'opérations [de traitement] d'image appliqué à ladite au moins une image dans la base de données de serveur, stocke l'ajustement de la séquence actuelle d'opérations de traitement d'image en tant que séquence actuelle d'opérations de traitement d'image, et transmet le résultat de la séquence actuelle d'opérations de traitement d'image au dispositif client sur le réseau de communication ; et

le processeur de serveur, en réponse à la réception de l'acceptation du résultat de la séquence actuelle d'opérations de traitement d'image du dispositif client, associe et stocke la séquence actuelle d'opérations de traitement d'image en tant que stratégie de segmentation pour ladite au moins une image dans la base de données de serveur.

2. Système de traitement selon la revendication 1, dans lequel le processeur de serveur détermine automatiquement des paramètres de chaque opération de traitement d'image, reçoit un ajustement d'un ou plusieurs paramètres d'une opération de traitement d'image et applique à l'image l'ajustement de paramètre de l'opération de traitement d'image.

3. Système de traitement selon la revendication 1, dans lequel la base de données de serveur comprend une pluralité d'images traitées par le processeur de serveur et une stratégie de segmentation associée à chaque image traitée ; dans lequel le processeur de serveur sélectionne une série d'images de référence à partir de la base de données du serveur et transmet la série d'images de référence au dispositif client sur le réseau de communication ; et dans lequel le processeur client reçoit une instruction pour ajouter une nouvelle image ou supprimer une image de la série d'images de référence provenant de l'utilisateur via l'interface utilisateur, et transmet les instructions au serveur sur le réseau de communication.

4. Système de récupération, comprenant :

un réseau de communication ;
un serveur comprenant un processeur de serveur, un classificateur et une base de données de serveur comprenant une série d'images de référence traitées par le système de traitement de la revendication 1 et une stratégie de segmentation associée à chaque image de référence ;
une pluralité de dispositifs client utilisateur, comprenant chacun un processeur client, une base de données client et une unité d'affichage pour afficher une interface utilisateur ;
un dispositif client utilisateur associé à un utilisateur transmet une série d'images de recherche au serveur pour traitement sur le réseau de communication ;
pour chaque image de recherche,
le processeur de serveur extrait une signature de configuration à partir de chaque image de recherche ;
le classificateur sélectionne une image candidate à partir de la série d'images de référence stockées dans la base de données avec une signature de configuration similaire à chaque image de recherche ; et

le processeur de serveur applique une stratégie de segmentation associée à l'image candidate à chaque image de recherche.

5.  Système de récupération selon la revendication 4, dans lequel le classificateur regroupe les images de référence sur la base de caractéristiques globales d'image ; et dans lequel le processeur de serveur stocke chaque image de référence traitée dans la base de données de serveur par une stratégie de segmentation associée et une signature de configuration qui capture une configuration globale de l'image, la signature de configuration étant un histogramme de gradients orientés.

6.  Système de récupération selon la revendication 5, dans lequel le processeur de serveur stocke chaque image de référence traitée dans la base de données de serveur par une catégorie d'une région d'intérêt.

7.  Système de récupération selon la revendication 4, dans lequel le classificateur détermine la stratégie de segmentation pour chaque image de recherche sur la base d'une similitude par rapport aux images de référence dans la même catégorie que chaque image de recherche.

8.  Système de récupération selon la revendication 4, dans lequel le classificateur détermine l'image candidate sur la base d'une recherche des k plus proches voisins, k images de référence visuellement similaires étant déterminées sur la base de leurs signatures de configuration.

9.  Système de récupération selon la revendication 8, dans lequel le classificateur regroupe des images ayant la même stratégie de segmentation en grappes, un centroïde représentant chaque groupe d'images ; et dans lequel le classificateur détermine le voisin k le plus proche en déterminant k centroïdes les plus proches.

10. Système de récupération selon la revendication 8, dans lequel le classificateur détermine les k plus proches voisins en employant au moins l'un des éléments suivants : hachage sensible à la similarité, fichiers d'approximation vectorielle, *best-bin first,* ou arbres BBD (*balanced box-decomposition trees*).

11. Système de récupération selon la revendication 4, dans lequel le classificateur identifie une ou plusieurs régions d'intérêt dans chaque image de recherche sur la base de la stratégie de segmentation sélectionnée ; et dans lequel le processeur de serveur détermine des descripteurs visuels pour différentes dimensions perceptuelles de ladite une ou plusieurs régions d'intérêt dans chaque image de recherche.

12. Système de récupération selon la revendication 11, dans lequel les dimensions perceptuelles sont la couleur, la forme et la texture.

13. Système de récupération selon la revendication 11, dans lequel le processeur de serveur emploie une représentation par sac de mots de sorte que chaque descripteur visuel est un histogramme de mots visuels, chaque mot visuel correspondant à un aspect de la dimension perceptuelle.

14. Système de récupération selon la revendication 11, dans lequel le processeur de serveur emploie une mesure de similarité cosinus pour calculer un score de similitude basé sur deux descripteurs visuels.

15. Système de récupération selon la revendication 4, dans lequel le dispositif client utilisateur associé à l'utilisateur reçoit une requête comprenant une image de requête et des critères de recherche optionnels de la part de l'utilisateur via l'interface utilisateur associée au dispositif client utilisateur ; dans lequel le processeur client du dispositif client utilisateur transmet la requête au serveur sur le réseau de communication ; dans lequel le processeur de serveur extrait une signature de configuration à partir de l'image de requête ; dans lequel le classificateur sélectionne une image candidate à partir de la série d'images de référence stockées dans la base de données avec une signature de configuration similaire à l'image de requête ; et dans lequel le processeur de serveur applique à l'image de requête une stratégie de segmentation associée à l'image candidate.

16. Système de récupération selon la revendication 15, dans lequel le classificateur identifie une ou plusieurs régions d'intérêt dans l'image de requête sur la base de la stratégie de segmentation sélectionnée ; et dans lequel le processeur de serveur détermine des descripteurs visuels pour différentes dimensions perceptuelles des régions d'intérêt dans l'image de requête.

17. Système de récupération selon la revendication 15, dans lequel le processeur de serveur calcule des descripteurs visuels sur les régions d'intérêt dans l'image de requête, détermine une ou plusieurs images de recherche à partir de la base de données de serveur qui sont similaires à l'image de requête, et classe les images recherchées identifiées sur la base de leur pertinence.

18. Système de récupération selon la revendication 15, dans lequel le dispositif client utilisateur associé à l'utilisateur reçoit un localisateur de ressource uniforme de l'image sélectionnée par l'utilisateur via l'interface utilisateur associée au dispositif client utilisateur ; et dans lequel le processeur client du dispositif client utilisateur transmet le localisateur de ressource uniforme au serveur pour traitement sur le réseau de communication.

19. Système de récupération selon la revendication 15, dans lequel le dispositif client utilisateur associé à l'utilisateur reçoit une sélection de catégories en tant que critères de recherche optionnels de la part de l'utilisateur via l'interface utilisateur associée au dispositif client utilisateur ; dans lequel le processeur client transmet la sélection de catégories au serveur pour traitement sur le réseau de communication ; et dans lequel le classificateur sélectionne une stratégie de segmentation pour l'image de requête conformément à la sélection de catégories.

20. Système de récupération selon la revendication 4, dans lequel le dispositif client utilisateur associé à l'utilisateur reçoit une requête comprenant une image de requête et des critères de recherche optionnels de la part de l'utilisateur via l'interface utilisateur associée au dispositif client utilisateur ; dans lequel le processeur client du dispositif client utilisateur extrait une signature de configuration à partir de l'image de requête et transmet la requête et la signature de configuration de l'image de requête au serveur sur le réseau de communication ; dans lequel le classificateur sélectionne une image candidate à partir de la série d'images de référence stockées dans la base de données avec une signature de configuration similaire à l'image de requête ; et dans lequel le processeur de serveur applique à l'image de requête une stratégie de segmentation associée à l'image candidate.

FIG. 1

FIG. 2

**1000**

FIG. 3a

FIG. 3b

308

310

FIG. 4

Image

↓

| Conversion to intensity | — 402 |

↓

| Face Detection | — 404 |

↓

| Application of Canny Edge Filter | — 406 |

↓

| Skin Detection using model based on face | — 408 |

↓

| Grabcut Routine | — 410 |

↓

Region Of Interest — 412

FIG. 5

FIG. 6

```
          ┌─────────────┐
          │    Start     │
          └──────┬──────┘
                 │
                 ▼
    ┌────────────────────────┐
    │ Load Image and optionally │ ─────╮
    │  metadata, e.g. category  │      ╰─── 600
    └────────────┬───────────┘
                 │
                 ▼
    ┌────────────────────────┐
    │  Find optimal segmentation │ ─────╮
    │   strategy in strategy index │    ╰─── 602
    └────────────┬───────────┘
                 │
                 ▼
    ┌────────────────────────┐
    │  Apply segmentation strategy │ ───╮
    │   to find region of interest │    ╰─── 604
    └────────────┬───────────┘
                 │
                 ▼
    ┌────────────────────────┐
    │  Extract visual descriptors │ ────╮
    │    from region of interest │      ╰─── 606
    └────────────┬───────────┘
                 │
                 ▼
    ┌────────────────────────┐
    │  Find matches in search index │ ──╮
    └────────────┬───────────┘      ╰─── 608
                 │
                 ▼
    ┌────────────────────────┐
    │      Score matches       │ ─────╮
    └────────────┬───────────┘      ╰─── 610
                 │
                 ▼
    ┌────────────────────────┐
    │  Return ranked list of results │ ─╮
    └────────────┬───────────┘      ╰─── 612
                 │
                 ▼
          ┌─────────────┐
          │     End      │
          └─────────────┘
```

FIG. 7

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2092444 A
- US 7660468 B
- US 20140010449 A
- US 6775399 B
- US 20100054596 A
- EP 2615572 A